# EUROPÄISCHE PATENTSCHRIFT

(11) **EP 4 169 114 B1**
(45) Veröffentlichungstag und Bekanntmachung des Hinweises auf die Patenterteilung: **21.08.2024**
(21) Anmeldenummer: 21733387.1
(22) Anmeldetag: 09.06.2021
(51) Int. Cl.: H01M 50/213, H01M 50/262, H01M 50/291, H01M 50/293

(54) **BATTERIEMODUL MIT EINER MEHRZAHL AN BATTERIEZELLEN UND VERFAHREN ZUR HERSTELLUNG EINES SOLCHEN**
BATTERY MODULE WITH A PLURALITY OF BATTERY CELLS, AND METHOD FOR PRODUCING SUCH A BATTERY MODULE
MODULE DE BATTERIE POURVU D'UNE PLURALITÉ D'ÉLÉMENTS DE BATTERIE ET PROCÉDÉ DE FABRICATION D'UN TEL MODULE DE BATTERIE

(30) Priorität: 23.06.2020 DE 102020207760
(43) Veröffentlichungstag der Anmeldung: 26.04.2023
(73) Patentinhaber: Robert Bosch GmbH, 70442 Stuttgart (DE)
(72) Erfinder: FOMEN, Gilles Desmond, 75417 Muehlacker (DE); MAENNER, Manuel, 70619 Stuttgart (DE); GLEITER, Andreas, 70437 Stuttgart (DE); ZINK, Markus, 70439 Stuttgart (DE)
(86) Internationale Anmeldenummer: PCT/EP2021/065470
(87) Internationale Veröffentlichungsnummer: WO 2021/259640

(56) Entgegenhaltungen:
- DE-A1- 102018 208 342

## Beschreibung

### Stand der Technik

Die Erfindung geht aus von einem Batteriemodul mit einer Mehrzahl an Batteriezellen nach Gattung des unabhängigen Anspruchs. Gegenstand der vorliegenden Erfindung ist auch ein Verfahren zur Herstellung eines solchen Batteriemoduls.

Aus dem Stand der Technik ist bekannt, dass Batteriemodule aus einer Mehrzahl an einzelnen Batteriezellen bestehen können, welche seriell und/oder parallel elektrisch leitend miteinander verschaltet sein können, so dass die einzelnen Batteriezellen zu dem Batteriemodul zusammengeschaltet sind.

Weiterhin werden solche Batteriemodule zu Batterien bzw. zu gesamten Batteriesystemen zusammengeschaltet.

Insbesondere bei Batteriemodulen mit sogenannten zylindrischen Batteriezellen können die Batteriezellen durch zwei nahezu identisch ausgebildete Zellhalter aufgenommen werden. Die Batteriezellen sind dabei in axialer und radialer Richtung der Batteriezelle zu fixieren. Dazu können bügelförmige axiale Spannelemente und hakenförmige radiale Spannelemente diese axiale und radiale Fixierung der Batteriezelle ausbilden. Die Spannelemente sind dabei in der Art elastisch ausgebildet, dass eine Montage der Batteriezellen die Spannelemente verformt und dadurch eine mechanische Fixierung ausgebildet ist. Im Falle einer mechanischen Überlast, wie beispielsweise einer schockartigen Belastung, ist die Fixierung oft nicht ausreichend und eine plastische Verformung der Spannelemente kann dazu führen, dass diese nach Beendigung der mechanischen Überlast nicht mehr in ihre ursprüngliche Form bzw. Lage zurückkehren können und dadurch keine ausreichende Fixierung mehr zur Verfügung stellen können.

Auch eine vergleichbar steifere Ausbildung der Spannelemente ist mit dem Problem behaftet, dass dadurch Toleranzen an den solchen Spannelementen reduziert werden. DE102018208342A1 offenbart ein Gehäuse für ein Batteriemodul.

Das Gehäuse dient zur Aufnahme mindestens einer Batteriezelle. Das Gehäuse um-fasst mindestens einen Batteriezellhalter, welcher mindestens eine Vertiefung aufweist, die zumindest annährend kreiszylindrisch und zumindest annährend rotationssymmetrisch zu einer in eine Axialrichtung verlaufende Mittelachse ausgebildet ist, und welche sich von einer Oberseite des Batteriezellhalters auf eine Unterseite des Batteriezellhalters zu erstreckt. Dabei ist in der mindestens einen Vertiefung des Batteriezellhalters mindestens ein Axialfederelement derart angeordnet, dass eine in die min- destens eine Vertiefung des Batteriezellhalters eingesetzte Batteriezelle in der Axialrichtung federelastisch aufgenommen ist.

### Offenbarung der Erfindung

Ein Batteriemodul mit einer Mehrzahl an Batteriezellen mit den Merkmalen des unabhängigen Anspruchs bietet den Vorteil, dass auf zuverlässige, robuste Weise eine mechanische Verspannung der Mehrzahl an Batteriezellen ausgebildet werden kann.

Dazu wird ein Batteriemodul mit einer Mehrzahl an zylindrisch ausgebildeten Batteriezellen zur Verfügung stellt. Die Batteriezellen sind dabei insbesondere als Lithium-lonen-Batteriezellen ausgebildet. Zudem sind die Batteriezellen elektrisch leitend seriell und/oder parallel miteinander verschaltet.

Zudem umfasst das Batteriemodul ein erstes Zellhalterelement. Das erste Zellhalterelement ist dabei aus einem ersten Material ausgebildet. Weiterhin weist das erste Zellhalterelement eine Mehrzahl an im Wesentlichen zylindrisch ausgebildeten Aufnahmen auf. Dabei ist jeweils eine Batteriezelle in einer Aufnahme aufgenommen.

Zwischen zumindest zwei Batteriezellen ist dabei ein Spannelement angeordnet.

Das Spannelement ist dabei aus einem zweiten Material ausgebildet. Insbesondere ist das zweite Material von dem ersten Material verschieden. Weiterhin ist das Spannelement an dem ersten Zellhalterelement angeordnet. Das Spannelement ist dabei in der Art innerhalb der Aufnahmen der zumindest zwei Batteriezellen angeordnet, dass das Spannelement eine mechanische Kraft zu einer Verspannung der Batteriezelle auf die jeweilige Batteriezelle ausbildet.

Durch die in den abhängigen Ansprüchen aufgeführten Maßnahmen sind vorteilhafte Weiterbildungen und Verbesserungen der im unabhängigen Anspruch angegebenen Vorrichtung möglich.

An dieser Stelle sei angemerkt, dass zylindrische Batteriezellen auch als Rundzellen bezeichnet sein können. Zylindrische Batteriezellen weisen Im Wesentlichen eine zylindrische Mantelfläche mit einer kreisrunden Querschnittsfläche auf, welche an ihren beiden gegenüberliegenden Seiten jeweils von einer kreisrunden Boden- bzw. Deckelfläche abgeschlossen ist. Besonders bevorzugt sind die zylindrischen Batteriezellen jeweils Rundzellen vom Typ 18650, welche einen Durchmesser von 18 mm und eine Höhe von 65 mm aufweisen.

Zylindrische Aufnahmen sind an dieser Stelle jeweils Hohlkörper, welche zumindest teilweise durch eine zylindrische Mantelfläche mit einer kreisrunden Querschnittsfläche begrenzt sind. Weiterhin weisen die zylindrischen Aufnahmen eine Bodenfläche oder Deckelfläche auf, welche die zylindrische Aufnahme ebenfalls begrenzt. An der gegenüberliegenden Seite weist der zylindrische Hohlkörper eine Öffnung auf, durch welche eine Batteriezelle eingesetzt werden kann.

An dieser Stelle sei bemerkt, dass unter einer Anordnung zwischen zumindest zwei Batteriezellen verstanden sein soll, dass das Spannelement zwischen den zumindest zwei Batteriezellen in der Art zugeordnet ist, dass das Spannelement die jeweilige Batteriezelle mechanisch kontaktiert und dadurch eine Kraft zu einer Verspannung der Batteriezelle auf die jeweilige Batteriezelle ausbilden kann. In einem besonders bevorzugten Fall ist das Spannelement dabei in einem Flächenschwerpunkt der jeweiligen Querschnittsflächen der zumindest zwei Batteriezellen angeordnet.

Ferner sei an dieser Stelle bemerkt, dass zu einer Anordnung des Spannelements an dem ersten Zellhalterelement das Spannelement an dem ersten Zellhalterelement angespritzt werden kann, beispielsweise mittels eines Zweikomponentenverfahrens, oder das Spannelement in das erste Zellhalterelement eingelegt bzw. eingesetzt werden kann.

Es ist zweckmäßig, wenn das zweite Material eine höhere Elastizität aufweist als das erste Material. Mit anderen Worten ausgedrückt bedeutet dies, dass das zweite Material weicher ist als das erste Material. Dadurch kann eine effiziente, robuste Verspannung ausgebildet werden.

Besonders bevorzugt ist es, wenn das Spannelement zwischen drei Batteriezellen angeordnet ist. Insbesondere ist das aus einem zweiten Material ausgebildete Spannelement dabei also zwischen drei Batteriezellen an dem ersten Zellhalterelement angeordnet. Dabei ist das Spannelement weiterhin in der Art innerhalb der Aufnahmen der drei Batteriezellen angeordnet, dass das Spannelement eine mechanische Kraft zu einer Verspannung der Batteriezelle auf die jeweilige Batteriezelle ausbildet. Eine solche Ausbildung bietet den Vorteil einer robusten, zuverlässigen Verspannung der Mehrzahl an zylindrisch ausgebildeten Batteriezellen, bei der ein zur Verfügung stehender Bauraum besonders effizient ausgenutzt werden kann.

Vorteilhafterweiße ist jeder der Batteriezellen zumindest ein Spannelement zugeordnet. Dadurch ist es möglich, jede Batteriezelle der Mehrzahl an Batteriezellen zuverlässig mechanisch zu fixieren. An dieser Stelle sei angemerkt, dass besonders bevorzugt einer Batteriezelle auch mehrere Spannelemente, wie beispielsweise drei Spannelemente, zugeordnet sein können. An dieser Stelle sei angemerkt, dass unter einer Zuordnung eines Spannelements zu einer Batteriezelle verstanden sein soll, dass das Spannelement die jeweilige Batteriezelle mechanisch kontaktiert und dadurch eine Kraft zu einer Verspannung der Batteriezelle auf die zugeordnete Batteriezelle ausbilden kann.

Besonders zweckmäßig umfasst das Spannelement einen ersten Abschnitt, welcher dazu ausgebildet ist, eine mechanische Kraft zu einer Verspannung der Batteriezelle in radialer Richtung oder axialer und radialer Richtung auszubilden. Unter Ausbildung einer mechanischen Kraft in radialer Richtung ist zu verstehen, dass senkrecht auf die Mantelfläche eine Kraft einwirkt. Insbesondere kann der erste Abschnitt dabei als ein Vorsprung oder eine Verdickung des Spannelements ausgebildet sein. Insbesondre ist das Spannelement keilförmig ausgebildet. Eine solches kann die Batteriezelle bspw. in radialer und axialer Richtung verspannen.

Es ist auch zweckmäßig, wenn das Spannelement einen zweiten Abschnitt aufweist, welcher dazu ausgebildet ist, eine mechanische Kraft zu einer Verspannung der Batteriezelle in axialer Richtung auf die jeweilige Batteriezelle auszubilden. Unter Ausbildung einer mechanischen Kraft in axialer Richtung ist zu verstehen, dass in der Längsrichtung der Batteriezelle auf die Boden- bzw. Deckelfläche eine Kraft einwirkt. Insbesondere ist der erste Abschnitt dabei im Wesentlichen senkrecht zu dem zweiten Abschnitt angeordnet.

Von Vorteil ist es, wenn das Batteriemodul zudem ein zweites Zellhalterelement aufweist. Das zweite Zellhalterelement ist dabei aus dem ersten Material ausgebildet. Weiterhin weist das zweite Zellhalterelement eine Mehrzahl an im Wesentlichen zylindrisch ausgebildeten Aufnahmen auf. Insbesondere kann das zweite Zellhalterelement identisch dem ersten Zellhalterelement ausgebildet sein. Dabei ist jeweils eine Batteriezelle in einer gemeinsam durch eine Aufnahme des ersten Zellhalterelements und eine Aufnahme des zweiten Zellhalterelements ausgebildeten Aufnahme aufgenommen. An dieser Stelle sei angemerkt, dass auch an dem zweiten Zellhalterelement zwischen zumindest zwei Batteriezellen ein aus dem zweiten Material ausgebildetes Spannelement an dem zweiten Zellhalterelement angeordnet sein kann, wobei das Spannelement weiterhin in der Art innerhalb der Aufnahmen der zumindest zwei Batteriezellen angeordnet ist, dass das Spannelement eine mechanische Kraft zu einer Verspannung der Batteriezelle auf die jeweilige Batteriezelle ausbildet.

Gegenstand der vorliegenden Erfindung ist auch ein Verfahren zur Herstellung eines eben beschriebenen Batteriemoduls mit einer Mehrzahl an zylindrisch ausgebildeten Batteriezellen. Dabei wird in einem ersten Verfahrensschritt ein aus einem zweiten Material ausgebildetes Spannelement an einem aus einem ersten Material ausgebildeten ersten Zellhalterelement, welches eine Mehrzahl an im Wesentlichen zylindrisch ausgebildeten Aufnahmen aufweist, angeordnet. Dabei wird in einem zweiten Verfahrensschritt jeweils eine Batteriezelle in einer Aufnahme in der Art aufgenommen wird, dass zwischen zumindest zwei Batteriezellen ein Spannelement angeordnet ist und das Spannelement eine mechanische Kraft zu einer Verspannung der Batteriezelle auf die jeweilige Batteriezelle ausbildet.

Insbesondere kann mit einer erfindungsgemäßen Ausführungsform eines Batteriemoduls durch Fixierung der Batteriezelle mittels des Spannelements das Batteriemodul flexibler und robuster gegenüber einer Toleranz der zylindrisch ausgebildeten Batteriezellen gestaltet werden. Weiterhin kann das Spannelement optimal und unabhängig auf die entsprechende Anwendung angepasst werden.

### Kurze Beschreibung der Zeichnungen

Ausführungsbeispiele der Erfindung sind in den Zeichnungen dargestellt und in der nachfolgenden Beschreibung näher erläutert.

Es zeigt:
- Figur 1: eine Anordnung eines Spannelements an einem ersten Zellhalterelement,
- Figur 2: das Spannelement in einer Unteransicht,
- Figur 3: eine Anordnung einer Batteriezelle in einer Aufnahme des ersten Zellhalterelements,
- Figur 4: schematisch eine Herstellung eines erfindungsgemäßen Batteriemoduls mit in einer Schnittansicht eines Ausschnitts eines erfindungsgemäßen Batteriemoduls und
- Figur 5: unterschiedliche Ausführungsformen eines Spannelements.

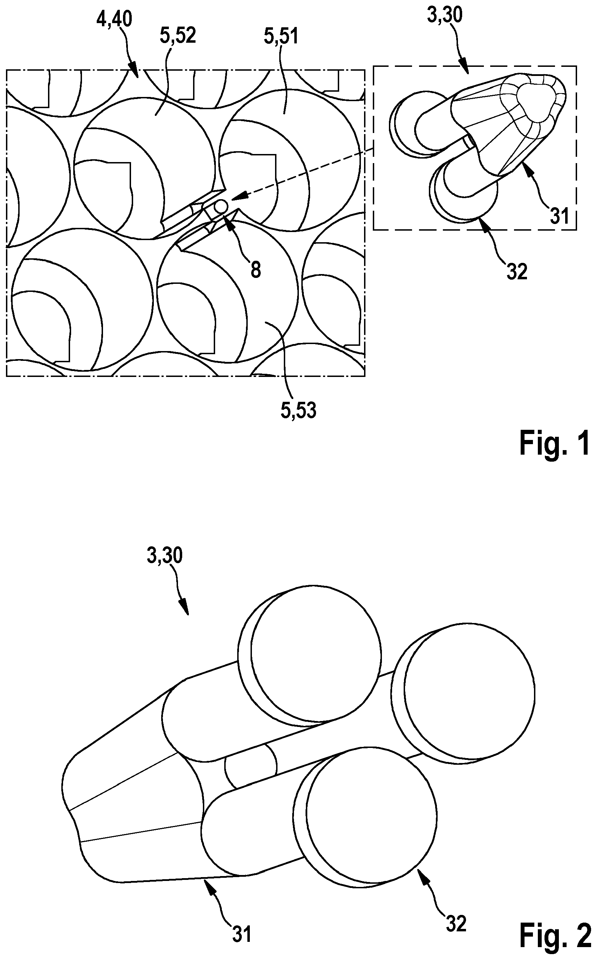

Die Figur 1 zeigt eine Anordnung eines Spannelements 3 an einem ersten Zellhalterelement 4.

Das erste Zellhalterelement 4 ist dabei aus einem ersten Material 40 ausgebildet. Das erste Material 40 kann dabei beispielsweise ein polymerer Werkstoff sein.

Das erste Zellhalterelement 4 umfasst dabei eine Mehrzahl an Aufnahmen 5. Insbesondere weist das erste Zellhalterelement 4 eine erste Aufnahme 51, eine zweite Aufnahme 52 und eine dritte Aufnahme 53 auf. Die Aufnahmen 5 sind dabei im Wesentlichen zylindrisch ausgebildet. Die Aufnahmen 5 sind dabei dazu ausgebildet, jeweils eine Batteriezelle 2 aufzunehmen. Beispielsweise nimmt die erste Aufnahme 51 eine erste Batteriezelle 21 auf, die zweite Aufnahme 52 eine zweite Batteriezelle 22 und die dritte Aufnahme 53 eine dritte Batteriezelle 23.

Das Spannelement 3 ist dabei aus einem zweiten Material 30 ausgebildet. Das zweite Material 30 kann dabei beispielsweise ein polymerer Werkstoff sein. Das erste Material 40 ist dabei verschieden von dem zweiten Material 30. Insbesondere weist das zweite Material 30 eine höhere Elastizität auf als das erste Material 40.

Das Spannelement 3 weist einen ersten Abschnitt 31 und einen zweiten Abschnitt 32 auf. Der erste Abschnitt 31 ist dazu ausgebildet, eine mechanische Kraft zu einer Verspannung der Batteriezelle 2 in radialer Richtung auf die jeweilige Batteriezelle 2 auszubilden. Der zweite Abschnitt 32 ist dazu ausgebildet, eine mechanische Kraft zu einer Verspannung der Batteriezelle 2 in axialer Richtung auf die jeweilige Batteriezelle 2 auszubilden. An dieser Stelle sei bemerkt, dass das Spannelement 3 auch keilförmig ausgebildet sein kann.

Insbesondere sind der erste Abschnitt 31 des Spannelements 3 oder der zweite Abschnitt 32 des Spannelements 3 rechtwinklig zueinander angeordnet.

Die Figur 1 zeigt insbesondere einen ersten Verfahrensschritt zur Herstellung eines erfindungsgemäßen Batteriemoduls 10, bei dem das Spannelement 3 an einem ersten Zellhalterelement 4 angeordnet wird.

Beispielsweise ist aus der Figur 1 auch zu erkennen, dass in einem erfindungsgemäßen Batteriemodul 10 zwischen zumindest zwei Batteriezellen 2 ein Spannelement 3 an dem ersten Zellhalterelement 4 angeordnet ist. Insbesondere ist das Spannelement 3 dabei zwischen drei Batteriezellen 2 angeordnet. An dieser Stelle sei weiterhin angemerkt, dass in dem Batteriemodul 10 jeder der Batteriezellen 2 zumindest ein Spannelement 3 zugeordnet ist.

Dabei kann das Spannelement 3 insbesondere mittels einer Steckverbindung mit dem ersten Zellhalterelement 4 verbunden werden. Dazu kann das erste Zellhalterelement 4 beispielsweise eine Steckaufnahme 8 aufweisen.

Die Figur 2 zeigt das Spannelement 3 in einer Unteransicht. Dabei sind der erste Abschnitt 31 und der zweite Abschnitt 32 zu erkennen. Insbesondere ist zu erkennen, dass der zweite Abschnitt 32 einen Anschlag ausbildet, welcher die Anordnung in der Tiefenrichtung begrenzt.

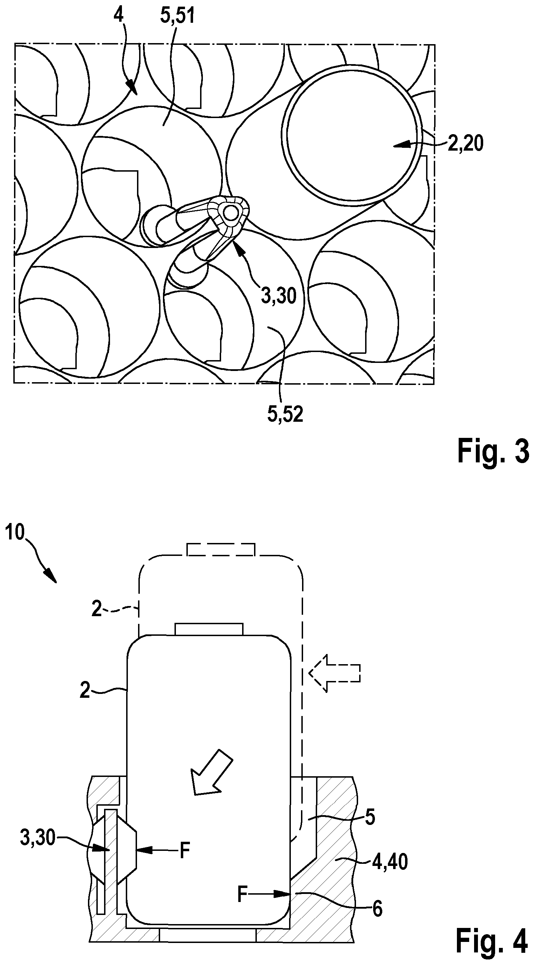

Figur 3 zeigt eine Anordnung einer Batteriezelle 2, insbesondere einer Lithiumlonen-Batteriezelle 20, in einer Aufnahme 5 des ersten Zellhalterelements 4. Die Batteriezelle 2 ist dabei als zylindrische Batteriezelle 2 ausgebildet. Dabei wird in jeder Aufnahme 5 des ersten Zellhalterelements 4 eine Batteriezelle 2 aufgenommen. In jeder Aufnahme 5 des ersten Zellhalterelements 4 ist also jeweils eine Batteriezelle 2 der Mehrzahl an Batteriezellen 2 aufgenommen. Diese Mehrzahl an Batteriezellen 2 kann elektrisch leitend seriell und/oder parallel miteinander verschaltet werden.

Weiterhin ist zu erkennen, dass das Spannelement 3 innerhalb der Aufnahme 5 des ersten Zellhalterelements 4 angeordnet ist. Insbesondere ist das Spannelement 3 dabei innerhalb der ersten Aufnahme 51, der zweiten Aufnahme 52 und der in der Figur 3 nicht zu erkennenden dritten Aufnahme 53 angeordnet. Somit ist das Spannelement 3 in dem Batteriemodul 10 zwischen drei Batteriezellen 2 angeordnet.

Die Figur 4 zeigt schematisch in einer Schnittansicht von der Seite einen Ausschnitt eines erfindungsgemäßen Batteriemoduls 10.

Dabei ist zunächst ein erstes Zellhalterelement 4 zu erkennen, welches aus dem ersten Material 40 ausgebildet ist. Weiterhin ist das Spannelement 3 zu erkennen, welches aus dem zweiten Material 30 ausgebildet ist.

Das erste Zellhalterelement 4 weist hierbei zusätzlich noch einen Vorsprung 6 auf, welcher dazu ausgebildet ist, eine zusätzliche mechanische Kraft zu einer Verspannung der Batteriezelle 2 auf die jeweilige Batteriezelle 2 auszubilden. Insbesondere bildet der Vorsprung 6 eine mechanische Kraft in radialer Richtung auf die jeweilige Batteriezelle 2 aus.

Zudem ist eine zylindrisch ausgebildete Batteriezelle 2 zu erkennen. Gestrichelt liniert ist weiterhin die Batteriezelle 2 vor der Anordnung in der Aufnahme 5 zu erkennen.

Insbesondere zeigt die Figur 4 einen zweiten Verfahrensschritt zur Herstellung eines erfindungsgemäßen Batteriemoduls 10, bei dem eine Batteriezelle 2 in der Aufnahme 5 angeordnet wird.

Insbesondere ist aus der Figur 4 zu erkennen, dass das Spannelement 3 eine mechanische Kraft zu einer Verspannung der Batteriezelle 2 auf die Batteriezelle 2 ausbildet.

An dieser Stelle sei angemerkt, dass das Batteriemodul 10 weiterhin ein aus dem ersten Material 3 ausgebildetes zweites Zellhalterelement aufweisen kann.

Das zweite Zellhalterelement ist identisch dem ersten Zellhalterelement 4 ausgebildet und weist eine Mehrzahl an im Wesentlichen zylindrisch ausgebildeten Aufnahmen auf.

Dabei kann das zweite Zellhalterelement auf das erste Zellhalterelement 4 mit den in den Aufnahmen 5 aufgenommenen Batteriezellen 2 aufgesetzt werden, sodass insgesamt jeweils eine Batteriezelle 2 in einer gemeinsam durch eine Aufnahme 5 des ersten Zellhalterelements 4 und eine Aufnahme des zweiten Zellhalterelements ausgebildeten Aufnahme aufgenommen ist.

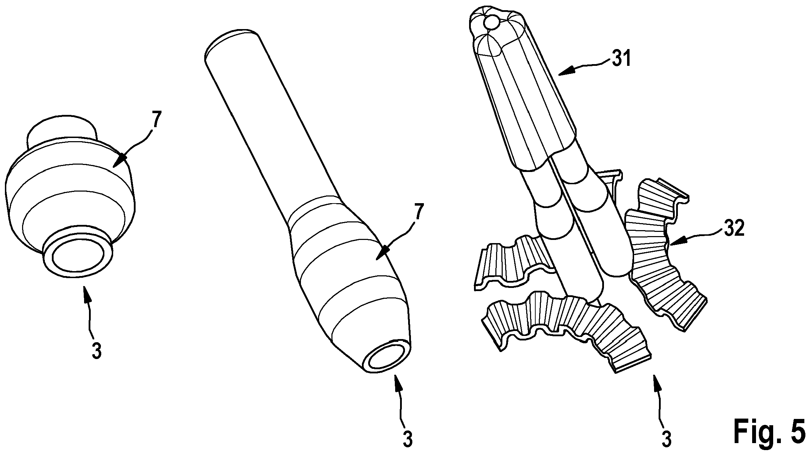

Die Figur 5 zeigt unterschiedliche Ausführungsformen eines Spannelements 3.

Die rechts dargestellte Ausführungsform unterscheidet sich von den beiden links dargestellten Ausführungsform dadurch, dass diese einen ersten Abschnitt 31 und einen zweiten Abschnitt 32 aufweist.

Die beiden links dargestellten Ausführungsformen weisen hingegen eine Verdickung 7 auf.

Allen drei Ausführungsform ist gemeinsam, dass sie mittels einer Steckverbindung mit dem ersten Zellhalterelement 4 verbunden werden können.

Durch solche unterschiedlichen Ausführungsformen können auch unterschiedliche zylindrisch ausgebildete Batteriezellen 2 insbesondere auch von unterschiedlichen Herstellern ausgewählt werden.

## Patentansprüche

1. Batteriemodul mit einer Mehrzahl an zylindrisch ausgebildeten Batteriezellen (2), insbesondere Lithium-Ionen-Batteriezellen (20), welche elektrisch leitend seriell und/oder parallel miteinander verschaltet sind, und einem aus einem ersten Material (40) ausgebildeten ersten Zellhalterelement (4), welches eine Mehrzahl an im Wesentlichen zylindrisch ausgebildeten Aufnahmen (5) aufweist, wobei jeweils eine Batteriezelle (2) in einer Aufnahme (5) aufgenommen ist,
**dadurch gekennzeichnet, dass**
zwischen zumindest zwei Batteriezellen (2) ein aus einem zweiten Material (30) ausgebildetes Spannelement (3) an dem ersten Zellhalterelement (4) angeordnet ist, wobei das Spannelement (3) weiterhin in der Art innerhalb der Aufnahmen (5) der zumindest zwei Batteriezellen (2) angeordnet ist, dass das Spannelement (3) eine mechanische Kraft zu einer Verspannung der Batteriezelle (2) auf die jeweilige Batteriezelle (2) ausbildet.

2. Batteriemodul nach dem vorhergehenden Anspruch 1,
**dadurch gekennzeichnet, dass**
das zweite Material (30) eine höhere Elastizität aufweist als das erste Material (40).

3. Batteriemodul nach einem der vorhergehenden Ansprüche 1 bis 2,
**dadurch gekennzeichnet, dass**
das Spannelement (3) zwischen drei Batteriezellen (2) angeordnet ist.

4. Batteriemodul nach einem der vorhergehenden Ansprüche 1 bis 3,
**dadurch gekennzeichnet, dass**
jeder der Batteriezellen (2) zumindest ein Spannelement (3) zugeordnet ist.

5. Batteriemodul nach einem der vorhergehenden Ansprüche 1 bis 4,
**dadurch gekennzeichnet, dass**
das Spannelement (3) einen ersten Abschnitt (31) aufweist, welcher ausgebildet ist, eine mechanische Kraft zu einer Verspannung der Batteriezelle (2) in radialer Richtung auf die jeweilige Batteriezelle (2) auszubilden.

6. Batteriemodul nach einem der vorhergehenden Ansprüche 1 bis 5,
**dadurch gekennzeichnet, dass**
das Spannelement (3) einen zweiten Abschnitt (32) aufweist, welcher ausgebildet ist, eine mechanische Kraft zu einer Verspannung der Batteriezelle (2) in axialer Richtung auf die jeweilige Batteriezelle (2) auszubilden.

7. Batteriemodul nach einem der vorhergehenden Ansprüche 1 bis 6,
**dadurch gekennzeichnet, dass**
das Batteriemodul (10) ein aus dem ersten Material (30) ausgebildetes zweites Zellhalterelement aufweist, welches eine Mehrzahl an im Wesentlichen zylindrisch ausgebildeten Aufnahmen aufweist, wobei jeweils eine Batteriezelle (2) in einer gemeinsam durch eine Aufnahme (5) des ersten Zellhalterelements (4) und eine Aufnahme des zweiten Zellhalterelements ausgebildeten Aufnahme aufgenommen ist.

8. Verfahren zur Herstellung eines Batteriemoduls (10) mit einer Mehrzahl an zylindrisch ausgebildeten Batteriezellen (2) nach einem der Ansprüche 1 bis 7, wobei in einem ersten Verfahrensschritt ein aus einem zweiten Material (30) ausgebildetes Spannelement (3) an einem aus einem ersten Material (40) ausgebildeten ersten Zellhalterelement (4), welches eine Mehrzahl an im Wesentlichen zylindrisch ausgebildeten Aufnahmen (5) aufweist, angeordnet wird, wobei in einem zweiten Verfahrensschritt jeweils eine Batteriezelle (2) in einer Aufnahme (5) in der Art aufgenommen wird, dass zwischen zumindest zwei Batteriezellen (2) ein Spannelement (3) angeordnet ist und das Spannelement (3) eine mechanische Kraft zu einer Verspannung der Batteriezelle (2) auf die jeweilige Batteriezelle (2) ausbildet.

## Claims

1. Battery module having a plurality of cylindrically formed battery cells (2), in particular lithium-ion battery cells (20), which are connected to one another in an electrically conductive manner serially and/or in parallel, and having a first cell holder element (4) which is formed from a first material (40) and has a plurality of substantially cylindrically formed receptacles (5), wherein in each case one battery cell (2) is accommodated in one receptacle (5),
**characterized in that**
a clamping element (3) which is formed from a second material (30) is arranged on the first cell holder element (4) between at least two battery cells (2), wherein the clamping element (3) is furthermore arranged inside the receptacles (5) of the at least two battery cells (2) in such a manner that the clamping element (3) forms a mechanical force on the respective battery cell (2) for bracing the battery cell (2).

2. Battery module according to the preceding Claim 1,
**characterized in that**
the second material (30) is more elastic than the first material (40).

3. Battery module according to either of the preceding Claims 1 and 2,
**characterized in that**
the clamping element (3) is arranged between three battery cells (2).

4. Battery module according to one of the preceding Claims 1 to 3,
**characterized in that**
each of the battery cells (2) is assigned at least one clamping element (3).

5. Battery module according to one of the preceding Claims 1 to 4,
**characterized in that**
the clamping element (3) has a first portion (31) which is designed to form a mechanical force on the respective battery cell (2) in the radial direction for bracing the battery cell (2).

6. Battery module according to one of the preceding Claims 1 to 5,
**characterized in that**
the clamping element (3) has a second portion (32) which is designed to form a mechanical force on the respective battery cell (2) in the axial direction for bracing the battery cell (2).

7. Battery module according to one of the preceding Claims 1 to 6,
**characterized in that**
the battery module (10) has a second cell holder element which is formed from the first material (30) and which has a plurality of substantially cylindrically formed receptacles, wherein
in each case one battery cell (2) is accommodated in a receptacle formed jointly by a receptacle (5) of the first cell holder element (4) and a receptacle of the second cell holder element.

8. Method for producing a battery module (10) having a plurality of cylindrically formed battery cells (2) according to one of Claims 1 to 7, wherein, in a first method step, a clamping element (3) which is formed from a second material (30) is arranged on a first cell holder element (4) which is formed from a first material (40) and which has a plurality of substantially cylindrically formed receptacles (5), wherein, in a second method step, in each case one battery cell (2) is accommodated in one receptacle (5) in such a manner that a clamping element (3) is arranged between at least two battery cells (2) and the clamping element (3) forms a mechanical force on the respective battery cell (2) for bracing the battery cell (2).

## Revendications

1. Module de batterie comportant une pluralité de cellules de batterie (2) de forme cylindrique, en particulier des cellules de batterie lithium-ion (20), lesquelles sont connectées électriquement les unes aux autres en série et/ou en parallèle, et un premier élément de support de cellule (4) réalisé à partir d'une première matière (40), lequel élément présente une pluralité de logements (5) de forme sensiblement cylindrique, une cellule de batterie (2) étant respectivement logée dans un logement (5),
**caractérisé en ce**
**qu'**un élément de serrage (3) réalisé à partir d'une deuxième matière (30) est disposé sur le premier élément de support de cellule (4) entre au moins deux cellules de batterie (2), l'élément de serrage (3) étant en outre disposé à l'intérieur des logements (5) des au moins deux cellules de batterie (2) de telle sorte que l'élément de serrage (3) réalise une force mécanique sur la cellule de batterie (2) respective pour un serrage de la cellule de batterie (2).

2. Module de batterie selon la revendication 1 précédente,
**caractérisé en ce que**
la deuxième matière (30) présente une élasticité plus élevée que la première matière (40).

3. Module de batterie selon l'une des revendications 1 à 2 précédentes,
**caractérisé en ce que**
l'élément de serrage (3) est disposé entre trois cellules de batterie (2).

4. Module de batterie selon l'une des revendications 1 à 3 précédentes,
**caractérisé en ce**
**qu'**au moins un élément de serrage (3) est associé à chacune des cellules de batterie (2).

5. Module de batterie selon l'une des revendications 1 à 4 précédentes,
**caractérisé en ce que**
l'élément de serrage (3) présente une première partie (31), laquelle est réalisée pour réaliser une force mécanique sur la cellule de batterie (2) respective dans la direction radiale pour un serrage de la cellule de batterie (2).

6. Module de batterie selon l'une des revendications 1 à 5 précédentes,
**caractérisé en ce que**
l'élément de serrage (3) présente une deuxième partie (32), laquelle est réalisée pour réaliser une force mécanique sur la cellule de batterie (2) respective dans la direction axiale pour un serrage de la cellule de batterie (2).

7. Module de batterie selon l'une des revendications 1 à 6 précédentes,
**caractérisé en ce que**
le module de batterie (10) présente un deuxième élément de support de cellule réalisé à partir de la première matière (30), lequel élément présente une pluralité de logements de forme sensiblement cylindrique,
une cellule de batterie (2) étant respectivement logée dans un logement réalisé en commun par un logement (5) du premier élément de support de cellule (4) et un logement du deuxième élément de support de cellule.

8. Procédé de fabrication d'un module de batterie (10) comportant une pluralité de cellules de batterie (2) de forme cylindrique selon l'une des revendications 1 à 7, dans lequel, dans une première étape de procédé, un élément de serrage (3) réalisé à partir d'une deuxième matière (30) est disposé sur un premier élément de support de cellule (4) réalisé à partir d'une première matière (40), lequel élément de support de cellule présente une pluralité de logements (5) de forme sensiblement cylindrique, dans lequel, dans une deuxième étape de procédé, une cellule de batterie (2) est logée respectivement dans un logement (5) de telle sorte qu'un élément de serrage (3) soit disposé entre au moins deux cellules de batterie (2) et que l'élément de serrage (3) réalise une force mécanique sur la cellule de batterie (2) respective pour un serrage de la cellule de batterie (2).
